# EUROPÄISCHE PATENTSCHRIFT

(11) **EP 0 512 267 B1**
(45) Veröffentlichungstag und Bekanntmachung des Hinweises auf die Patenterteilung: **12.07.1995**
(21) Anmeldenummer: 92105969.7
(22) Anmeldetag: 07.04.1992
(51) Int. Cl.: B41F 5/20, F16C 13/00, B41F 13/26, B41F 5/16, B32B 31/00, B30B 3/00

(54) **Kaschiermaschine**
Laminator
Laminoir

(30) Priorität: 02.05.1991 DE 4114313
(43) Veröffentlichungstag der Anmeldung: 11.11.1992
(73) Patentinhaber: DU PONT DE NEMOURS (DEUTSCHLAND) GMBH, 61352 Bad Homburg (DE); E.I. DU PONT DE NEMOURS AND COMPANY, Wilmington Delaware 19898 (US)
(72) Erfinder: Ulrich, Peter, W-6054 Rodgau 6 (DE); Jenkins, Stephen, Queensbury, Bradford BD13 2HY (GB); Jones, Gary, Wainstalls, Halifax HX2 7TR (GB)

(56) Entgegenhaltungen:
- EP-A- 0 066 527
- DE-B- 1 111 003
- FR-A- 2 214 008
- GB-A- 1 065 028
- US-A- 2 718 827
- US-A- 3 736 869
- US-A- 4 127 066
- US-A- 4 603 569
- PATENT ABSTRACTS OF JAPAN vol. 10, no. 44 (M-455)(2101) 21 Februar 1986 ; & JP-A-60 196206 (ISHIKAWAJIMA HARIMA JUKOGYO K.K.)

## Beschreibung

Die Erfindung betrifft einen Laminator.

Laminatoren werden beispielsweise verwendet, um Farbauszüge eines Mehrfarbendruckes zu prüfen. Hierbei wird ein Bildträger, der an den zu färbenden Bereichen eine klebrige Oberfläche aufweist, zusammen mit einer Farbfolie, die eine Farbschicht aufweist und mit dieser Farbschicht auf der Trägerfolie aufliegt, durch einen Walzenspalt geführt. Die beiden den Walzenspalt bildenden Walzen pressen die Farbfolie und die Trägerfolie unter Druck aufeinander. An den klebrigen Bereichen bleibt die Farbe hängen und löst sich von der Farbfolie ab.

Hierbei ist es von Bedeutung, daß nicht nur ein relativ hoher Druck erzeugt wird, sondern der Druck auch gleichmäßig über die Länge des Walzenspaltes, d.h. über die Längsausdehnung der Walzen, verteilt wird. Die den Druck im Walzenspalt erzeugenden Kräfte führen zu einem Verbiegen der Walzen. Dieses Verbiegen führt zu einer ungleichmäßigen Druckverteilung im Walzenspalt, so daß beispielsweise in der Mitte des Walzenspaltes ein anderer Druck als an den Enden ausgeübt wird. Dies führt bei der Erzeugung von Farbauszügen zu Ungleichmäßigkeiten, die einen Fehler in den Farbauszügen vortäuschen können.

Man hat deswegen versucht, ein Durchbiegen der Walzen zu verhindern. Bei einer aus US-PS 4 127 066 bekannten Anordnung ist die untere Walze des den Walzenspalt bildenden Walzenpaares in einem Rahmen fest angeordnet, während die obere Walze in Lagern gelagert ist, die in dem Rahmen vertikal verschiebbar sind. Ein Paar von Stützwalzen wirkt von oben auf die obere Walze, wobei die Stützwalzen in einem Hilfsrahmen gelagert sind, der über eine Schraubspindel mit dem Rahmen verbunden ist. Durch Verdrehen der Schraubspindel läßt sich der Druck der Stützwalzen auf die obere Walze und damit der Druck im Walzenspalt verstärken oder vermindern. Bei längeren Walzen muß jedoch auch die Stützwalze entsprechend lang ausgebildet sein mit der Gefahr, daß sich nunmehr die Stützwalze durchbiegt. Die Kraftaufbringung auf die obere Walze erfolgt dann im wesentlichen im Bereich der beiden Lager der Stützwalzen, was zu einer W-Form des Walzenspaltes mit einer entsprechend ungleichmäßigen Verteilung des Druckes führt. Bei relativ kurzen Walzen, bei denen praktisch keine spürbare Durchbiegung auftritt, hat es sich herausgestellt, daß die hindurchgeführten Bahnen verlaufen, d.h. ihre Bewegungsrichtung weicht ohne Hilfsmaßnahmen von einer Richtung rechtwinklig zur Längserstreckung des Walzenspaltes ab. Dies kann insbesondere an den Rändern der Folie zu einer Faltenbildung führen. Eine Faltenbildung ist aber beim Erzeugen von Farbauszügen nicht annehmbar, da bei Auftreten von Falten die gewünschte Farbübertragung nicht mehr gewährleistet ist, insbesondere wenn beim Erzeugen von Farbauszügen mehrere Farben, in der Regel vier, hintereinander in der gleichen Art und Weise aufgebracht werden müssen.

Der Erfindung liegt die Aufgabe zugrunde, einen Laminator anzugeben, der bei einer möglichst gleichmäßigen Druckverteilung im Walzenspalt das Risiko des Verlaufens der Folien wesentlich vermindert.

Diese Aufgabe wird durch einen Laminator gelöst mit einem durch zwei Walzen gebildeten Walzenspalt, bei dem eine der Walzen durch über die Länge der Walze verteilte und in einer Richtung senkrecht zu einer den Walzenspalt durchsetzenden Ebene bewegbare Stützelemente mit einer durch eine Krafterzeugungseinrichtung erzeugten Preßkraft beaufschlagt ist, wobei die andere Walze durch über die Länge der Walze verteilte Lagerelemente abgestützt ist, die an einem Träger befestigt sind, wobei der Träger biegbar ist und die Durchbiegung einstellbar ist.

Die Lagerelemente, die an dem Träger angeordnet sind, folgen zwangsläufig der Durchbiegung des Trägers. Dementsprechend kann auch die an den Lagerelementen abgestützte Walze entsprechend dieser Biegelinie durchgebogen werden, wenn sie von ihrer Gegenwalze mit einer entsprechenden Kraft beaufschlagt wird. Diese Kraft wird über die Krafterzeugungseinrichtung aufgebracht, die die Preßkraft über die Stützelemente auf die Gegenwalze überträgt. Um der Durchbiegung folgen zu können, sind die Stützelemente bewegbar, und zwar in einer Ebene senkrecht zur den Walzenspalt durchsetzenden Ebene. Es wird daher mit dem neuen Laminator ein Walzenspalt erzeugt, der nicht mehr völlig eben ist, sondern eine durch die Durchbiegung des Trägers bestimmte Durchbiegung aufweist. Da die Stützelemente, die die Preßkraft erzeugen, aber über die Länge der Walze gleichmäßig verteilt sind, läßt sich gewährleisten, daß trotz der Durchbiegung im Walzenspalt eine gleichmäßige Druckverteilung vorherrscht. Die Durchbiegung führt zu einer automatischen Zentrierung der durch den Walzenspalt laufenden Folien. Die gleichmäßig verteilten Stützelemente führen zu einer gleichmäßigen Druckverteilung im Walzenspalt, so daß Farbauszüge mit einer hohen Qualität gewonnen werden können.

Hierbei ist bevorzugt, daß die Stützelemente und die Lagerelemente auf Lücke versetzt zueinander angeordnet sind. Die Druckverteilung im Walzenspalt wird dadurch weiter vergleichmäßigt.

In einer weiteren vorteilhaften Ausführungsform sind die Stützelemente und/oder die Lagerelemente durch Rollenpaare gebildet, bei denen jeweils eine Rolle vor und eine Rolle hinter einer durch beide Walzenachsen verlaufenden Ebene angeordnet ist. Die Walzen werden also nicht nur in einer Richtung senkrecht zu der durch den Walzenspalt verlaufenden Ebene unterstützt, sondern es werden auch Kräfte aufgenommen, die in Richtung der Bewegungsbahn der Folien (oder in entgegengesetzter Richtung) wirken, also sogenannte Querkräfte. Derartige Kräfte können beispielsweise von den Folien aufgebracht werden. Natürlich sind diese Kräfte wesentlich geringer als die Kräfte, die den Druck im Walzenspalt erzeugen. Die Durchbiegung der Walzen kann dadurch genauer eingestellt werden. Sie verläuft dann lediglich in einer Ebene, in der auch die beiden Walzenachsen liegen.

Bevorzugterweise ist der Träger über eine längenveränderbare Stütze an einem Rahmen abgestützt. Die längenveränderbare Stütze definiert den Scheitelpunkt der Durchbiegung des Trägers und somit auch des Walzenspalts. Durch die Veränderung der Länge der Stütze läßt sich auch die Durchbiegung einstellen.

Hierbei ist bevorzugt, daß die längenveränderbare Stütze durch eine Schraubspindel gebildet ist, die in einem mit dem Rahmen verbundenen Gewinde drehbar ist. Die Schraubspindel ist in dem Träger drehbar gelagert. Durch Drehen der Schraubspindel wird der Abstand zwischen Träger und Rahmen vergrößert oder verkleinert, d.h. die wirksame Länge der Stütze verändert. Das Gewinde ermöglicht eine relativ feine Übersetzung der Drehbewegung in eine Längsbewegung, so daß die Durchbiegung des Trägers sehr fein und mit hoher Genauigkeit eingestellt werden kann.

Mit Vorteil ist der Träger an eine Traverse des Rahmens abgestützt, die eine um ein Vielfaches größere Biegesteifigkeit als der Träger aufweist. Eine Längenveränderung der Stütze hat dann praktisch ausschließlich die Wirkung, daß sich die Durchbiegung des Trägers ändert. Eine Durchbiegung der Traverse kann außer acht gelassen werden, da diese aufgrund der großen Biegesteifigkeit der Traverse gegenüber der Durchbiegung des Trägers vernachlässigbar ist.

Mit Vorteil sind die Stützelemente paarweise auf waagebalkenartigen Doppelhebeln angeordnet, die um eine in einer zwischen den jeweiligen Stützelementen verlaufenden Ebene liegende Achse verschwenkbar sind, wobei die Achse auf einer mit der Preßkraft beaufschlagbaren Basis angeordnet ist. Dadurch, daß die Stützelemente nicht mehr starr in einer Linie nebeneinander angeordnet sind, sondern auf waagebalkenartigen Doppelhebeln, können sie der Durchbiegung der Walze folgen. Trotzdem kann jedes Stützelement den gleichen Anteil an Preßkraft übertragen. Hierdurch wird erreicht, daß trotz der Durchbiegung der Walzen im gesamten Walzenspalt eine gleichmäßige Druckverteilung erzielt werden kann.

Auch ist bevorzugt, daß zwei Doppelhebel mit Abstand zueinander auf einem die Basis bildenden Trägerhebel angeordnet sind, der um eine in einer zwischen den beiden Doppelhebeln verlaufenden Ebene liegenden Achse verschwenkbar ist, wobei die Achse mit der Krafterzeugungseinrichtung verbunden ist. Diese Anordnung ist insbesondere bei längeren Walzen bevorzugt. Hierbei lassen sich die einzelnen Stützelemente auch bei einer durchgebogenen Walze mit einer relativ gleichmäßigen Kraftverteilung an die Walze anpressen. Der Druck im Walzenspalt kann dadurch sehr gleichmäßig gestaltet werden.

Bevorzugterweise weist die Krafterzeugungseinrichtung einen Stößel auf, der sich auf der Umfangsfläche einer drehbar gelagerten und antreibbaren Exzenterscheibe abstützt. Durch das Verdrehen der Exzenterscheibe wird der Stößel angehoben oder abgesenkt, d.h. in Richtung auf den Walzenspalt zu oder von ihm weg bewegt. Durch die Exzenterscheibe ist ein relativ großes Bewegungsspiel des Stößels und deswegen auch eine entsprechend große Bewegungsmöglichkeit der Stützelemente möglich. Man kann hierbei sogar vorsehen, daß die eine Walze abgesenkt wird und den Walzenspalt öffnet. Die Kraft, die auf den Stößel aufgebracht werden kann und damit die im Walzenspalt herrschende Preßkraft, ist abhängig von dem Drehmoment, mit dem die Exzenterscheibe angetrieben wird und der Steigung der Umfangsfläche der Exzenterscheibe gegenüber einer Zylinderfläche.

Hierbei ist bevorzugt, daß zwischen Stößel und Basis eine Federanordnung vorgesehen ist. Die Federanordnung ist letztendlich ausschlaggebend für den im Walzenspalt herrschenden Druck.

Hierbei ist bevorzugt, daß die Federanordnung zwei Tellerfedern aufweist, deren Vorspannung einstellbar ist. Die Vorspannung der Tellerfedern ist entscheidend für den im Walzenspalt herrschenden Druck.

Die Erfindung wird im folgenden anhand eines bevorzugten Ausführungsbeispiels in Verbindung mit der Zeichnung beschrieben. Hierin zeigen:

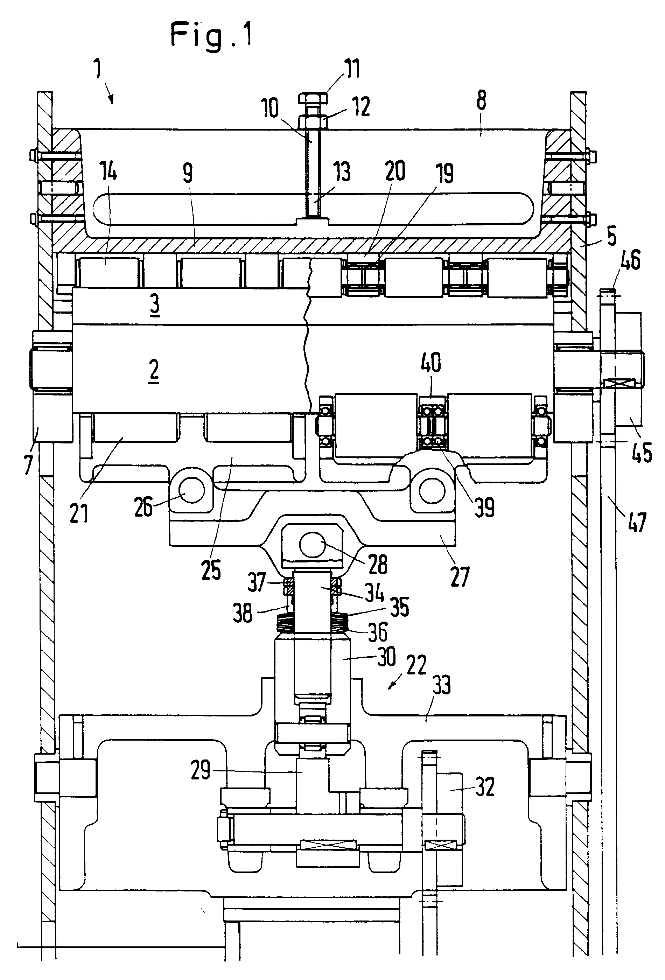

- Fig. 1: eine Frontansicht eines Laminators, teilweise im Aufriß, und

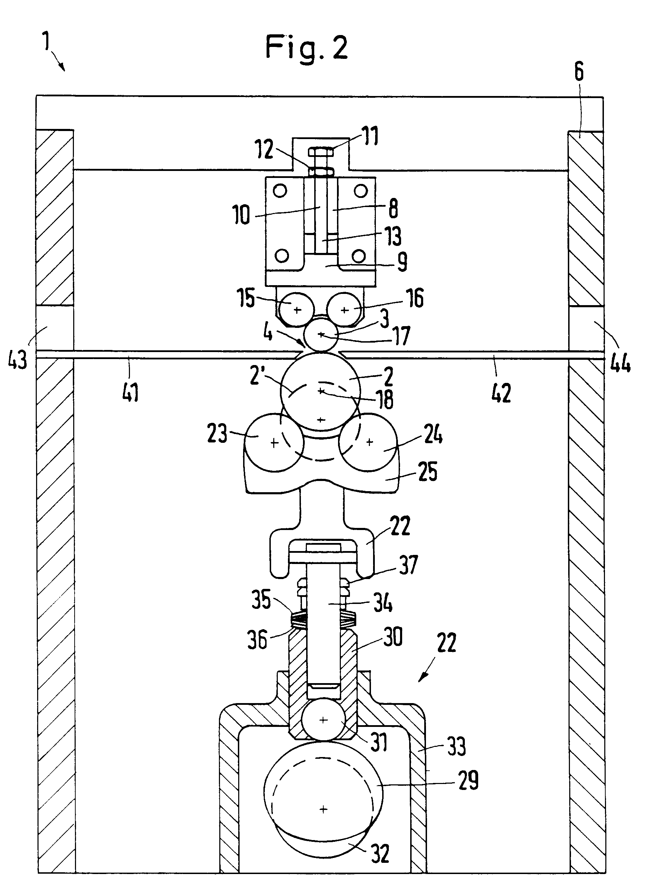

- Fig. 2: eine Seitenansicht des Laminators, teilweise im Aufriß.

Ein Laminator 1 weist eine Walze 2 und eine Gegenwalze 3 auf, die zusammen einen Walzenspalt 4 bilden. Walze 2 und Gegenwalze 3 sind innerhalb eines Rahmens 5 angeordnet, der Teil eines Gehäuses 6 ist. Die Walze 2 ist hierbei in Lagern 7 gelagert, die in Rahmen 5 in vertikaler Richtung verschiebbar angeordnet sind. Die Gegenwalze 3 ist in nicht naher dargestellter Weise unmittelbar im Rahmen 5 gelagert.

Der Rahmen 5 weist eine Traverse 8 auf. Unterhalb der Traverse 8 ist ein Träger 9 angeordnet. Im Träger 9 ist eine Schraubspindel 10 drehbar gelagert, die eine Drehmomentangriffsfläche 11, beispielsweise einen Sechskant, aufweist. Die Schraubspindel 10 ist in einem mit der Traverse fest verbundenen Gewinde 12 geführt. Bei einem Verdrehen der Schraubspindel 11 verändert sich somit die Länge eines zwischen der Traverse 8 und dem Träger 9 frei liegenden Abschnitts 13 der Schraubspindel. Der Abschnitt 13 bildet somit eine Stütze mit veränderbarer Länge. Der Träger 9 hat eine wesentlich geringere Biegesteifigkeit als die Traverse 8. Eine Längenänderung des Abschnitts 13 der Schraubspindel 10 führt also dazu, daß sich der Träger 9 durchbiegt. Eine Durchbiegung der Traverse 8 kann dabei außer Betracht bleiben, da sie vernachlässigbar klein ist.

An der Unterseite des Trägers 9 sind über die Länge der Gegenwalze 3 verteilt fünf Lagerelemente 14 angeordnet. Jedes Lagerelement ist aus einem Paar Lagerrollen 15, 16 gebildet. Die Rollen sind auf beiden Seiten einer durch die Achsen 17, 18 von Gegenwalze 3 und Walze 2 verlaufenden Ebene angeordnet. Die Lagerrollen sind in Nadellagern 19 gelagert, die in Lagerböcken 20 befestigt sind. Die Lagerböcke 20 sind unmittelbar mit dem Träger 9 verbunden.

Wenn nun der Träger 9 durch eine Änderung der Länge des Abschnitts 13 der Schraubspindel 10 eine Durchbiegung erfährt, folgen die Lagerelemente 14 im wesentlichen dieser Biegelinie. Sobald auf die Gegenwalze 3 eine Kraft ausgeübt wird, die zu einer Durchbiegung der Gegenwalze 3 führt, wird sich die Gegenwalze 3 solange durchbiegen, bis sie an allen Lagerelementen 14 anliegt Somit kann auch eine Biegelinie der Gegenwalze 3 definiert werden.

Die Kraft auf die Gegenwalze 3 wird durch die Walze 2 aufgebracht. Die Walze 2 wird wiederum über Stützelemente 21 von einer Krafterzeugungseinrichtung 22 mit Kraft beaufschlagt. Jedes Stützelement ist aus einem Paar von Stützrollen 23, 24 gebildet, die auf beiden Seiten der durch die Achsen 17, 18 der Gegenwalze 3 und der Walze 2 verlaufenden Ebene angeordnet sind. Die Stützelemente 21 sind paarweise auf einem Doppelhebel 25 angeordnet. Der Doppelhebel ist um einen Drehpunkt 26 nach Art eines Waagebalkens drehbar. Der Drehpunkt 26 ist in einer Ebene angeordnet, die sich zwischen den beiden das Paar bildenden Stützelementen 21 erstreckt. Er kann dabei unterhalb der Stützelemente 21 angeordnet sein. Wenn sich die Walze 2 aufgrund der durch die Krafterzeugungseinrichtung 22 aufgebrachten Kraft durchbiegt, können die Stützelemente 21 dieser Durchbiegung folgen. Die Kraft auf die Walze bleibt also gleichmäßig verteilt. Hierdurch wird verhindert, daß an den Stellen, an denen sich die Walze 2 weniger stark durchbiegt, ein erhöhter Druck im Walzenspalt erzeugt wird. Die Stützelemente 21 sind mit Hilfe von Kugellagern 39, die in Lagerböcken 40 befestigt sind, gelagert, wobei die Lagerböcke 40 auf den Doppelhebeln 25 befestigt sind.

Im vorliegenden Ausführungsbeispiel sind zwei Doppelhebel 25 vorgesehen, die gemeinsam auf einem als Basis für die Drehpunkte 26 dienenden Trägerhebel 27 angeordnet sind. Der Trägerhebel ist um einen Drehpunkt 28 ebenfalls nach Art eines Waagebalkens verschwenkbar. Der Drehpunkt 28 ist in der Krafterzeugungseinrichtung 22 angeordnet.

Die Krafterzeugungseinrichtung 22 weist eine Exzenterscheibe 29 auf, auf deren Umfangsfläche sich ein Stößel 30 über ein Laufrad 31 abstützt. Die Exzenterscheibe 29 kann über ein Antriebsrad 32 angetrieben werden, das über einen nicht näher dargestellten Antrieb, beispielsweise einen Kettenantrieb, verdreht werden kann.

Zur Bewegung ist der Stößel 30 in einem Lager 33 in Richtung auf den Walzenspalt zu oder von ihm weg verschiebbar gelagert.

Im Stößel 30 ist eine Stößelstange 34 angeordnet, die im Stößel 30 gegen die Kraft einer aus zwei Tellerfedern 35, 36 bestehenden Federanordnung im Stößel 30 verschiebbar ist. Am aus dem Stößel 30 herausragenden Ende der Stößelstange 34 ist der Drehpunkt 28 angeordnet. Die Tellerfedern 35, 36 sind mit Hilfe einer aus Muttern 37, die auf ein auf der Außenseite der Stößelstange aufgebrachtes Gewinde aufgeschraubt sind, und einem Distanzstück bestehenden Vorspanneinrichtung vorspannbar. Die Vorspannung der Tellerfedern 35, 36 ist entscheidend für den mit Hilfe der Krafterzeugungseinrichtung 22 im Walzenspalt 4 erzeugbaren Druck.

Zur Führung einer Trägerfolie und einer Farbfolie ist eine Folienführung 41, 42 vorgesehen, die sich von einer Eingangsöffnung 43 im Gehäuse 6 zum Walzenspalt 4 bzw. vom Walzenspalt 4 zu einer Ausgangsöffnung 44 im Gehäuse 6 erstrecken.

Der Laminator arbeitet wie folgt:
Bevor eine aus einer Trägerfolie und einer Farbfolie bestehende Folienkombination in den Laminator 1 eingeführt wird, wird die Exzenterscheibe 29 verdreht. Hierdurch wird die Walze 2 in die gestrichelt dargestellte Position 2' abgesenkt. Der Walzenspalt 4 ist hierdurch geöffnet. Die Folienkombination kann eingeführt werden und gleitet auf der Papierführung 42 weiter. Natürlich ist es auch möglich, daß sich bereits die Farbfolie in dem Walzenspalt 4 befindet und lediglich die Trägerfolie zugeführt wird. Sobald sich die Folienkombination in dem Walzenspalt 4 befindet, wird durch Verdrehen der Exzenterscheibe 29 die Walze 2 angehoben und der Walzenspalt 4 geschlossen. Die Bedienungsperson, die die Folienkombination kennt und weiß, welcher Druck im Walzenspalt für eine zufriedenstellende Farbübertragung notwendig ist, hat zuvor mit Hilfe der Muttern 37 den im Walzenspalt 4 zu erzeugenden Druck eingestellt. Außerdem hat sie zuvor mit Hilfe der Schraubspindel 10 die Durchbiegung der Gegenwalze 3 und somit auch die sich ergebende Durchbiegung der Walze 2 eingestellt. Sobald der Walzenspalt 4 geschlossen ist, wird die Walze 2 und die Gegenwalze 3 in Drehung versetzt, beispielsweise durch einen Zahnradantrieb 45, 46, der über einen nicht näher dargestellten Motor und eine Kette 47 angetrieben wird. Die Folienkombination im Walzenspalt 4 wird durch die Bewegung der Walze 2 und der Gegenwalze 3 gleichzeitig transportiert und mit Druck beaufschlagt, so daß im Walzenspalt eine Farbübertragung von der Farbfolie auf die Trägerfolie stattfindet, und zwar nach und nach über die gesamte Länge des zu behandelnden Folienabschnitts.

## Patentansprüche

1. Laminator (1) mit einem durch zwei Walzen (2, 3) gebildeten Walzenspalt (4), bei dem eine der Walzen (2) durch über die Länge der Walze verteilte und in eine Richtung senkrecht zu einer den Walzenspalt durchsetzenden Ebene bewegbare Stützelemente (21) mit einer durch eine Krafterzeugungseinrichtung (22) erzeugte Preßkraft beaufschlagt ist, wobei die andere Walze (3) durch über die Länge der Walze verteilte Lagerelemente (14) abgestützt ist, die an einem Träger (9) befestigt sind, wobei der Träger (9) biegbar und die Durchbiegung einstellbar ist.

2. Laminator nach Anspruch 1, dadurch gekennzeichnet, daß die Stützelemente (21) und die Lagerelemente (14) auf Lücke versetzt zueinander angeordnet sind.

3. Laminator nach Anspruch 1 oder 2, dadurch gekennzeichnet, daß die Stützelemente (21) und/oder die Lagerelemente (14) durch Rollenpaare (15, 16; 23, 24) gebildet sind, bei denen jeweils eine Rolle vor und eine Rolle hinter einer durch beide Walzenachsen (17, 18) verlaufenden Ebene angeordnet ist.

4. Laminator nach einem der Ansprüche 1 bis 3, dadurch gekennzeichnet, daß der Träger (9) über eine längenveränderbare Stütze (13) an einem Rahmen (5) abgestützt ist.

5. Laminator nach Anspruch 4, dadurch gekennzeichnet, daß die längenveränderbare Stütze (13) durch eine Schraubspindel (10) gebildet ist, die in einem mit dem Rahmen (5) verbundenen Gewinde (12) drehbar ist.

6. Laminator nach Anspruch 4 oder 5, dadurch gekennzeichnet, daß der Träger (9) an einer Traverse (8) des Rahmens (5) abgestützt ist, die eine um ein Vielfaches größere Biegesteifigkeit als der Träger aufweist.

7. Laminator nach einem der Ansprüche 1 bis 6, dadurch gekennzeichnet, daß die Stützelemente (21) paarweise auf waagebalkenartigen Doppelhebeln (25) angeordnet sind, die um eine in einer zwischen den jeweiligen Stützelementen verlaufenden Ebene liegende Achse (26) verschwenkbar sind, wobei die Achse (26) auf einer mit der Preßkraft beaufschlagbaren Basis angeordnet ist.

8. Laminator nach Anspruch 7, dadurch gekennzeichnet, daß zwei Doppelhebel (25) mit Abstand zueinander auf einem die Basis bildenden Trägerhebel (27) angeordnet sind, der um eine in einer zwischen den beiden Doppelhebeln verlaufenden Ebene liegende Achse verschwenkbar ist, wobei die Achse (28) mit der Krafterzeugungseinrichtung (22) verbunden ist.

9. Laminator nach einem der Ansprüche 1 bis 8, dadurch gekennzeichnet, daß die Krafterzeugungseinrichtung (22) einen Stößel (30) aufweist, der sich auf der Umfangsfläche einer drehbar gelagerten und antreibbaren Exzenterscheibe (29) abstützt.

10. Laminator nach Anspruch 9, dadurch gekennzeichnet, daß zwischen Stößel (30) und Basis eine Federanordnung (35, 36) vorgesehen ist.

11. Laminator nach Anspruch 10, dadurch gekennzeichnet, daß die Federanordnung zwei Tellerfedern (35, 36) aufweist, deren Vorspannung einstellbar ist.

## Claims

1. A laminator (1) with a roller nip (4) formed by two rollers (2,3),
one of the rollers (2) being subjected to pressure produced by a force-generating device (22 ) comprising movable support elements (21) applying pressure in a direction perpendicular to a plane passing through the roller nip and distributed over the length of the roller,
the other roller (3) being supported by means of bearing elements (14) distributed over the length of the roller and attached to a bracket (9),
whereby the bracket is flexible and the curvature ajustable.

2. The laminator in accordance with claim 1, characterized in that, the supporting elements (21) and the bearing elements (14) are staggered with respect to each other.

3. The laminator in accordance with claims 1 or 2, characterized in that, the supporting elements (21) and/or the bearing elements (14) are pairs of rolls (15, 16; 23, 24) with respectively one roll being positioned before and one roll being positioned beyond a plane running through the roller axis (17,18).

4. The laminator in accordance with claims 1 to 3, characterized in that, the bracket (9) is supported in a frame (5) by a variable length strut (13) which is supported in a frame (5).

5. The laminator in accordance with claim 4, characterized in that, the variable length strut (13) is a screw spindle (10) whis is rotatable in a threaded device (12) attached to the frame (5).

6. The laminator in accordance with claim 4 or 5, characterized in that, the bracket (9) is supported in the frame (5) on a cross bar (8) that has many times flex resistance than the bracket.

7. The laminator in accordance with claims 1 to 6, characterized in that, the supporting elements (21) are arranged in pairs of double-arms levers of a balance beam type (25), double arm lever being pivotable about an axis (26) lying in a plane running between the respective supporting elements, whereby the axis (26) is positioned on a base that can be subjected to pressure.

8. The laminator in accordance with claim 7, characterized in that, the two double-arms levers (25) are spaced appart from each other on a support lever (27) forming the base, the support lever being pivotable about an axis lying in a plane between the two double-arm levers,whereby the axis (28) is joined with the force-generating device (22).

9. The laminator in accordance with claims 1 to 8, characterized in that, the force-generating device (22) has a plunger (30) supported on the edge of an excentric rotatable disc (29).

10. The laminator in accordance with claim 9 characterized in that, a spring system (35, 36) is located between the plunger (30) and the base.

11. The laminator in accordance with claim 10, characterized in that, the spring system has two disk springs (35,36) with adjustable initial tension.

## Revendications

1. Machine à presser par laminage (1) présentant un intervalle de laminage (4) constitué entre deux rouleaux ou cylindres (2, 3), dans laquelle l'un des rouleaux (2) est sollicité par une force de pressage, produite par un dispositif de génération de force (22), au moyen d'éléments d'appui (21) répartis sur la longueur du rouleau et susceptibles de se déplacer dans une direction perpendiculaire au plan traversant l'intervalle entre rouleaux, l'autre rouleau (3) étant soutenu par des éléments de palier (14) répartis sur la longueur du rouleau et fixés à un support (9), le support (9) étant susceptible de fléchir et sa flèche étant réglable.

2. Machine à presser par laminage selon la revendication 1, caractérisée en ce que les éléments d'appui (21) et les éléments de palier (14) sont disposés décalés les uns par rapport aux autres en laissant subsister des vides.

3. Machine à presser par laminage selon la revendication 1 ou 2, caractérisée en ce que les éléments d'appui (21) et/ou les éléments de palier (14) sont constitués par des paires de rouleaux (15, 16; 23, 24), pour chacun desquels un rouleau est disposé respectivement devant et un rouleau est disposé respectivement derrière, un plan passant par les deux axes de rouleaux (17, 18).

4. Machine à presser par laminage selon l'une des revendications 1 à 3, caractérisée en ce que le support (9) est en appui sur un cadre (5) par l'intermédiaire d'un pilier de soutien (13) dont la longueur est modifiable.

5. Machine à presser par laminage selon la revendication 4, caractérisée en ce que le pilier de soutien (13) de longueur modifiable est constitué par une broche filetée (10) susceptible de tourner dans un taraudage (12) relié au cadre (5).

6. Machine à presser par laminage selon la revendication 4 ou 5, caractérisée en ce que le support (9) est en appui sur une traverse (8) du cadre (5) qui présente une rigidité en flexion plusieurs fois supérieure à celle du support.

7. Machine à presser par laminage selon l'une des revendications 1 à 6, caractérisée en ce que les éléments d'appui (21) sont disposés par paires sur des leviers doubles (25) du type plateaux de balance, montés pivotants autour d'un axe (26) passant dans le plan s'étendant entre les éléments d'appui respectifs, l'axe (26) étant disposé sur une base susceptible d'être soumise à la force de pressage.

8. Machine à presser par laminage selon la revendication 7, caractérisée en ce que deux leviers doubles (25) sont disposés à distance l'un de l'autre sur un levier-support (27) constituant la base et pouvant pivoter autour d'un axe passant par un plan s'étendant entre les deux leviers doubles, l'axe (28) étant relié au dispositif de génération de force (22).

9. Machine à presser par laminage selon l'une des revendications 1 à 8, caractérisée en ce que le dispositif de génération de force (22) présente un poussoir (30) qui prend appui sur la surface périphérique d'un disque excentrique (29) monté de façon à pouvoir tourner et à pouvoir être entraîné.

10. Machine à presser par laminage selon la revendication 9, caractérisée en ce qu'entre le poussoir (30) et la base est prévu un agencement à ressort (35, 36).

11. Machine à presser par laminage selon la revendication 10, caractérisée en ce que l'agencement à ressort présente deux ressorts en rondelle (35, 36) dont la précontrainte est réglable.
